# EUROPEAN PATENT APPLICATION

(11) **EP 3 228 917 A1**
(43) Date of publication of application: **11.10.2017**
(21) Application number: 16163803.6
(22) Date of filing: 05.04.2016
(51) Int. Cl.: F16P 1/02, F01D 21/04

(54) **COUPLING GUARD**

(71) Applicant: Siemens Aktiengesellschaft, 80333 München (DE)
(72) Inventor: Gerritzen, Thomas, 7577 JA Oldenzaal (NL)

(57) **Abstract**

The invention relates to a coupling guard (8) for covering a coupling device (10) for connecting a first machine (4) to a second machine (6), wherein the coupling guard (8) comprises a first guard unit (16) and a second guard unit (18), the second guard unit (18) comprises a first flange (20) as well as a second flange (22) and the first flange (20) of the second guard unit (18) is connected with a flange (24) of the second guard unit (18).

A coupling guard (8) with an enhanced design may be achieved in that the flange (24) of the first guard unit (16) and the first flange (20) of the second guard unit (18) are in contact with each other at their respective rear side (26).

## Description

The invention relates to a coupling guard for covering a coupling device for connecting a first machine to a second machine, wherein the coupling guard comprises a first guard unit and a second guard unit, the second guard unit comprises a first flange as well as a second flange and the first flange of the second guard unit is connected with a flange of the first guard unit.

A coupling guard is used to cover a rotating part like a coupling and/or a shaft of a machinery system. On the one hand, the coupling guard protects the coupling and/or the shaft from impurities. On the other hand, the coupling guard is installed for safety reasons, for instance to prevent clothes to be caught by the coupling/shaft and to be wrapped around it.

A coupling guard is needed in a machinery system, if a first machine is connected with a second machine, wherein particularly the machines are rotating machine. In many cases, the connection between the two machines is realised by means of a coupling device. The first machine may drive or may be driven by the second machine.

Commonly, the coupling guard is flange connected with the machines to cover the coupling/shaft.

Further it is common, that the machines are mounted to a base structure bevor installing the coupling guard. Thus, the axial distance between the machines is fix. The coupling guard has to be squeezed between the machines, particularly between their flanges. A sealing is needed between the flanges. For example, paper gaskets may be used as a sealing between the flanges. The coupling guard together with the paper gaskets may be squeezed between the machines, wherein the paper gaskets and/or the face sides of the flanges can get damaged easily. Since the paper gaskets get compressed during the mounting, an axial length compensation has to be made.

Commonly, the distance between the rotating equipment modules is kept as small as possible. Following, the space for mounting the coupling guard and/or the space for service processes is limited.

An objective of the invention is to provide a coupling device with an enhanced design.

This object is accomplished by means of the coupling guard of the type mentioned in the introduction, wherein, according to the invention, the flange of the first guard unit and the first flange of the second guard unit are in contact with each other at their respective rear side.

The rear side of the respective flange may be understood as the side opposite to the face side of the flange. In the meaning of this invention, the face side of the flange of an element may be that side of the flange, which point away from the centre of the element. Thus, the rear side of the flange of an element may be that side of the flange, which points towards the centre of the element.

The invention is based on the idea that mounting of a coupling guard will be easy, if the coupling guard has not to be squeezed between the two machines for being fixed. Therefore, the second guard unit of the described coupling guard can be mounted partially on top of the first guard unit. Further, the second guard unit now can slide in axial direction on top of the first guard unit.

The coupling guard may be shaped axially symmetrically or at least basically axially symmetrically. The terms "axial" and "radial" may be understood with respect to a symmetry axis of the coupling guard according to their usual meaning. Further, the first guard unit may be arranged coaxially with respect to the second guard unit.

Since the coupling guard/the guard unit(s) has/have not to be squeezed between the two machines, mounting/installing of the coupling guard may be easier and/or quicker. Due to easier and/or quicker mounting of the coupling guard, service processes will be easier and/or quicker.

A further advantage of the design of the coupling guard is, that damage of the flanges (of the coupling guard as well as of the machines) may be prevented.

Expediently, the flange of the first guard unit extends radially outwards. Further, it is preferred that the first flange of the second guard unit extends radially inwards.

The second guard unit may surround the first guard unit in sections. Moreover, it is expedient, if the second guard unit surrounds the flange of the first guard unit.

Advantageously, a sealing is placed between the flange of the first guard unit and the first flange of the second guard unit. For example, the sealing may be a gasket, particularly a paper gasket. Also other gaskets are possible, like a flange gasket, an O-Ring or similar.

Moreover, by the design of the coupling guard, damage of the sealing may be prevented. Another advantage is, that no axial length compensation has to be taken into account, because, even if the sealing is compressed, changes in thickness of the sealing counterbalances themselves within the described design.

Preferably, the sealing is a fluid sealant. Thus, less parts are necessary to mount. A further advantage of the fluid sealant is, that it can be used universally for every flange size and/or flange shape. Thus, no specific gaskets has to be ordered and/or hold in stock. For example the fluid sealant may comprise polyester urethane and/or silicone. Other fluid sealants may be possible as well.

It is advantageous, if the first guard unit is connectable with the first machine. Particularly, the first guard unit may be flange connectable with the first machine.

Further, it is preferred, that the second flange of the second guard unit is connectable with the second machine, particularly with a flange of the second machine. The second flange of the second guard unit may be connectable with the flange of the second machine at their respective face sides.

In a preferred embodiment of the invention, at least one of the guard units is formed cylindrical. Particularly each guard unit may be formed cylindrical.

Advantageously, at least one of the guard units comprises two half shells. Particularly each guard unit respectively may comprise two half shells. The two half shells of one guard unit may be connected to another, for instance by means of bolts. For mounting/installing of the respective guard unit, the respective half shells may be placed and/or replaced separately, particularly from opposite directions. In this way, mounting/installing and/or dismounting of the coupling guard may be easy.

Furthermore, the invention relates to a machinery system comprising a guard device according to the previous description.

Expediently, the machinery system comprises a first machine. Further, the machinery system may comprise a second machine. Moreover, the machinery system may exhibit a coupling device. Preferentially, the coupling device connects the first machine to the second machine, particularly mechanically.

For instance, both machines may be rotating machines. Further it is advantageous, if the coupling device connects a shaft of the first machine to a shaft of the second machine.

The first machine may, for instance, be a (power) turbine or a series of interconnected turbines. The second machine may, for instance, be a compressor.

It is advantageous, that the first guard unit is connected with the first machine. Particularly, the first guard unit may be flange connected with the first machine. A sealing may be placed between the connecting flanges of the first guard unit and the first machine.

Further, it is preferred, that the second flange of the second guard unit is connected with the second machine, particularly with a flange of the second machine. The second flange of the second guard unit may be connected with the flange of the second machine at their respective face sides. A sealant may be placed between the second flange of the second guard unit and the flange of the second machine. The sealant can be a gasket. Preferably, the sealant is a fluid sealant, particularly similar to the above mentioned fluid sealant.

For installing/mounting the coupling guard, the first guard unit may be connected with the first machine, for instance by means of bolts. Further, the second guard unit may be placed on top of the first guard unit, particularly in that way, that the first flange of the second guard unit is directed to the first machine and the second flange of the second guard unit is directed to the second machine. Further, the second guard unit may be shifted axially, until the second flange of the second guard unit is in contact with the second machine. Then, the second flange of the second guard unit may be connected with the second machine, for instance by means of bolts.

Even if terms are used in the singular or in a specific numeral form, the scope of the invention should not be restricted to the singular or the specific numeral form. Where applicable the indefinite article "a" can be regarded as "at least one".

The previously given description of advantageous embodiments of the invention contains numerous features which are partially combined with one another in the dependent claims. Expediently, these features can also be considered individually and be combined with one another into further suitable combinations. More particularly, these features may be combined with the coupling guard and the method according to the respective independent claim individually as well as in any suitable combination.

The above-described characteristics, features and advantages of the invention and the manner in which they are achieved can be understood more clearly in connection with the following description of exemplary embodiment which will be explained with reference to the drawings. The exemplary embodiment is intended to illustrate the invention, but is not supposed to restrict the scope of the invention to combinations of features given therein, neither with regard to functional features. Furthermore, suitable features of the exemplary embodiment can also be explicitly considered in isolation, be removed from the exemplary embodiment, and/or be combined with any of the appended claims.

In the drawings display:
- FIG 1: a schematic overview of two machines, which are connected by a coupling guard;
- FIG 2: a schematic overview of the mounting of the coupling guard of FIG 1;

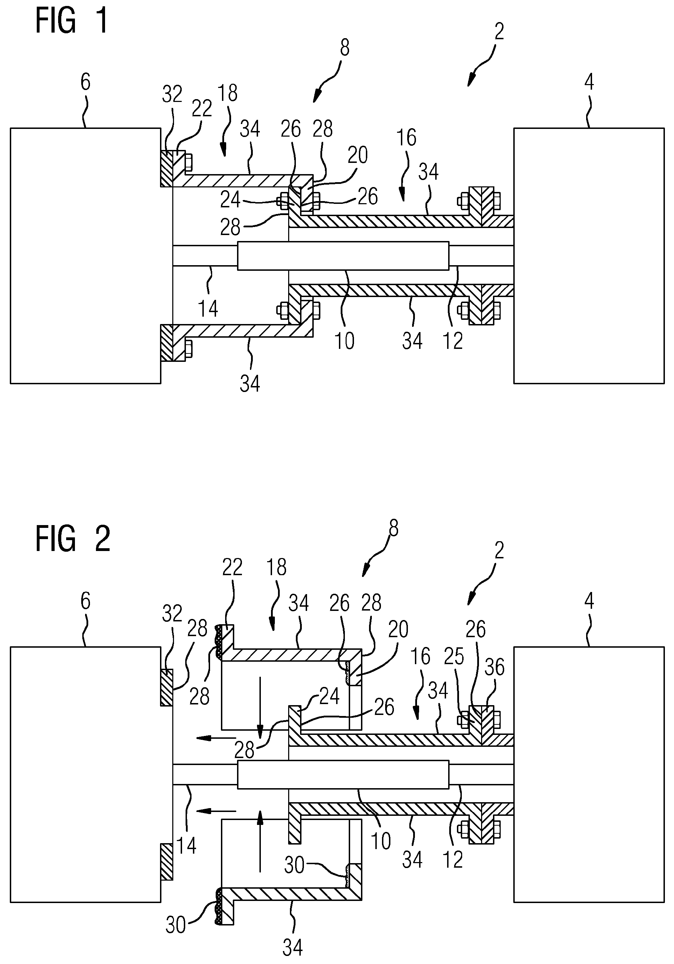

FIG 1 shows schematically a machinery system 2. The machinery system 2 comprises a first machine 4 and a second machine 6, both of which are rotating machines. In the present case, the first machine 4 is a turbine and the second machine 6 is a compressor.

Moreover, the machinery system 2 exhibits a coupling guard 8. Further, the machinery system 2 comprises a coupling device 10, which connects the first machine 4 to the second machine 6. Particularly, the coupling device 10 connects a shaft 12 of the first machine 4 to a shaft 14 of the second machine 6.

The coupling guard 8 covers both shafts 12, 14 as well as the coupling device 10. Further, the coupling guard 8 as well as relevant flanges of the machines 4, 6 are shown in sectioning.

The coupling guard 8 comprises a first guard unit 16 that is connected to the first machine 4. In the shown embodiment, the first guard unit 16 is flange connected to the first machine 4 by means of bolts and nuts. Principally, the first guard unit 16 could also be connected otherwise with the first machine 4, for instance the first guard unit 16 could be welded to the first machine 4.

Further, the coupling guard 8 comprises a second guard unit 18 that is connected to the second machine 6, particularly by means of bolts and nuts and/or threads.

The coupling guard 8 is formed axial symmetrical, particularly cylindrical. Thus, each guard unit 16, 18 is formed axial symmetrical, particularly cylindrical.

The second guard unit 18 comprises a first flange 20 as well as a second flange 22. The first flange 20 of the second guard unit 18 extends radially inwards and is connected with a flange 24 of the first guard unit 16, wherein the flange 24 of the first guard unit 16 extends radially outwards. Thus, both guard units 16, 18 of the coupling guard 8 are connected to each another.

In particular, the flange 24 of the first guard unit 16 and the first flange 20 of the second guard unit 18 are in contact with each other at their respective rear side 26.

The rear side 26 of the respective flange 20, 24 may be understood as the side opposite to the face side 28 of the flange 20, 24. In the meaning of this invention, the face side 28 of the flange 20, 24 of an element 18, 16 may be that side of the flange 20, 24, which point away from the centre of the element 18, 16. Thus, the rear side 26 of the flange 20, 24 of an element 18, 16 may be that side of the flange 20, 24, which points towards the centre of the element 18, 16.

Further, the second guard unit 18 surrounds the first guard unit 16 in sections. Particularly, the second guard unit 18 surrounds the flange 24 of the first guard unit 16.

A fluid sealant 30 (see FIG 2) is placed between the flange 24 of the first guard unit 16 and the first flange 20 of the second guard unit 18. Also the flange connection between the first guard unit 16 and the first machine 4 comprises a fluid sealant (not shown).

The second flange 22 of the second guard unit 18 is connected with a flange 32 of the second machine 6 at their respective face sides 28. A fluid sealant 30 (see FIG 2) is placed between the second flange 22 of the second guard unit 18 and the flange 32 of the second machine 6.

Each guard unit 16, 18 exhibits two half shells 34. The respective two half shells 34 of each guard unit 16, 18 may be connected to another, for instance by means of bolts. For mounting/installing of the respective guard unit, the shells may be placed and/or replaced separately, particularly from opposite directions (see FIG 2). In this way, mounting/installing and/or dismounting of the coupling guard 8 will be easy.

FIG 2 shows schematically one step of the mounting of the coupling guard 8 of FIG 1.

For installing/mounting the coupling guard 8, the two half shells 34 of the first guard unit 16 are placed separately from opposite directions (with regard of the drawing from top and from bottom). Each half shell 34 of the first guard unit 16 may have a rim for being connected with the other half shell 34 of the first guard unit 16. A sealant, particularly a fluid sealant, may be placed at the rim of one of the half shells 34 of the first guard unit 16. The two half shells 34 of the first guard unit 16 are connected to each other by means of bolts.

The first guard unit 16 comprises the flange 24, which points toward the second machine 6, and another flange 25, which points towards the first machine 4. A sealant, particularly a fluid sealant, may be placed at the face side 26 of the other flange 25 of the first guard unit 16. Further, the first guard unit 16 is flange connected to the first machine 4 by means of bolts and nuts. In other words, the other flange 25 of the first guard unit 16 may be connected with a flange 36 of the first machine 4 by means of bolts and nuts.

Then, the second guard unit 18 is placed on top of the first guard unit 16 in that way, that the second guard unit 18 surrounds the first guard unit 16 in sections. Particularly, the second guard unit 18 is placed on top of the first guard unit 16 in that way, that the first flange 20 of the second guard unit 18 points towards the first machine 4 and the second flange 22 of the second guard unit 18 points towards the second machine 6. Therefore, the two half shells 34 of the second guard unit 18 are placed separately from opposite directions (with regard to FIG 2 from top and from bottom as indicated by vertical arrows in the drawing). Each half shell 34 of the second guard unit 18 may have a rim for being connected with the other half shell 34 of the second guard unit 18. A sealant, particularly a fluid sealant, may be placed at the rim of one of the half shells 34 of the second guard unit 18.
The two half shells 34 of the second guard unit 18 are connected to each other by means of bolts.

A fluid sealant 30 is placed at the rear side 26 of the first flange 20 of the second guard unit 18. Moreover, a fluid sealant 30 is placed at the face side 28 of the second flange 22 of the second guard unit 18. Alternatively and/or additionally, a fluid sealant can be placed at the rear side 26 of the flange 24 of the first guard unit 16, which flange 24 points towards the second machine 6, and/or a fluid sealant can be placed at the face side 28 of the flange 32 of the second machine 6.

Further, the second guard unit 18 is shifted axially (as indicated by horizontal arrows in the drawing), until flange 24 of the first guard unit 16 is in contact with the first flange 20 of the second guard unit 18 and the second flange 22 of the second guard unit 18 is in contact with the second machine 6. Thus, a fluid sealant 30 is situated between the flange 24 of the first guard unit 16 and the first flange 20 of the second guard unit 18. Moreover, a fluid sealant 30 is situated between the face side 28 of the second flange 22 of the second guard unit 18 and the flange 32 of the second machine 6.

The flange 24 of the first guard unit 16 is connected with the first flange 20 of the second guard unit 18, particularly by means of bolts and nuts. More in detail, the rear side 26 of the flange 24 of the first guard unit 16 is connected with the rear side 26 of the first flange 20 of the second guard unit 18.

Further, the second flange 22 of the second guard unit 18 is connected with the second machine 6, particularly with the flange 32 of the second machine 6, by means of bolts.

Principally, it would be possible to use gaskets like paper gaskets as a sealant. With the described design, no axial length compensation has to be taken into account, even if the sealing is compressed, because changes in thickness of the sealing counterbalance themselves within this design.

## Claims

1. Coupling guard (8) for covering a coupling device (10) for connecting a first machine (4) to a second machine (6), wherein the coupling guard (8) comprises a first guard unit (16) and a second guard unit (18), the second guard unit (18) comprises a first flange (20) as well as a second flange (22) and the first flange (20) of the second guard unit (18) is connected with a flange (24) of the second guard unit (18),
**characterised in that**
the flange (24) of the first guard unit (16) and the first flange (20) of the second guard unit (18) are in contact with each other at their respective rear side (26).

2. Coupling guard (8) according to claim 1,
**characterised in that** the flange (24) of the first guard unit (16) extends radially outwards and the first flange (20) of the second guard unit (18) extends radially inwards.

3. Coupling guard (8) according to claim 1 or 2, **characterised in that** the second guard unit (18) surrounds the flange (24) of the first guard unit (16).

4. Coupling guard (8) according to any of the preceding claims,
**characterised in that** a fluid sealant (30) is placed between the flange (24) of the first guard unit (16) and the first flange (20) of the second guard unit (18).

5. Coupling guard (8) according to any of the preceding claims,
**characterised in that** the first guard unit (16) is connectable, particularly flange connectable, with the first machine (4).

6. Coupling guard (8) according to any of the preceding claims,
**characterised in that** the second flange (22) of the second guard unit (18) is connectable with a flange (32) of the second machine (6) at their respective face sides (28).

7. Coupling guard (8) according to any of the preceding claims,
**characterised in that** at least one of the guard units (16, 18), particularly each guard unit (16, 18), is formed cylindrical.

8. Coupling guard (8) according to any of the preceding claims,
**characterised in that** at least one of the guard units (16, 18), particularly each guard unit (16, 18) respectively, comprises two half shells (34).

9. Machinery system (2) comprising a coupling guard (8) according to any of the preceding claims,
a first machine (4), a second machine (6) and a coupling device (10), wherein the coupling device (10) connects the first machine (4) to the second machine (6).

10. Machinery system (2) according to claim 9,
**characterised in that** both machines (4, 6) are rotating machines, wherein the coupling device (10) connects a shaft (12) of the first machine (4) to a shaft (14) of the second machine (16).

11. Machinery system (2) according to claim 9 or 10,
**characterised in that** the first machine (4) is a turbine and the second machine (6) is a compressor.

12. Machinery system (2) according to any of the claims 9 to 11,
**characterised in that** the first guard unit (16) is connected, particularly flange connected, with the first machine (4) and
the second flange (22) of the second guard unit (18) is connected with a flange (32) of the second machine (6) at their respective face sides (28).

## Amended claims

### Amended claims in accordance with Rule 137(2) EPC.

1. Coupling guard (8) for covering a coupling device (10) for connecting a first machine (4) to a second machine (6), wherein the coupling guard (8) comprises a first guard unit (16) and a second guard unit (18), the second guard unit (18) comprises a first flange (20) as well as a second flange (22) and the first flange (20) of the second guard unit (18) is connected with a flange (24) of the first guard unit (16),
**characterised in that**
the flange (24) of the first guard unit (16) and the first flange (20) of the second guard unit (18) are in contact with each other at their respective rear side (26).

2. Coupling guard (8) according to claim 1,
**characterised in that** the flange (24) of the first guard unit (16) extends radially outwards and the first flange (20) of the second guard unit (18) extends radially inwards.

3. Coupling guard (8) according to claim 1 or 2,
**characterised in that** the second guard unit (18) surrounds the flange (24) of the first guard unit (16).

4. Coupling guard (8) according to any of the preceding claims,
**characterised in that** a fluid sealant (30) is placed between the flange (24) of the first guard unit (16) and the first flange (20) of the second guard unit (18).

5. Coupling guard (8) according to any of the preceding claims,
**characterised in that** the first guard unit (16) is connectable, particularly flange connectable, with the first machine (4).

6. Coupling guard (8) according to any of the preceding claims,
**characterised in that** the second flange (22) of the second guard unit (18) is connectable with a flange (32) of the second machine (6) at their respective face sides (28).

7. Coupling guard (8) according to any of the preceding claims,
**characterised in that** at least one of the guard units (16, 18), particularly each guard unit (16, 18), is formed cylindrical.

8. Coupling guard (8) according to any of the preceding claims,
**characterised in that** at least one of the guard units (16, 18), particularly each guard unit (16, 18) respectively, comprises two half shells (34).

9. Machinery system (2) comprising a coupling guard (8) according to any of the preceding claims,
a first machine (4), a second machine (6) and a coupling device (10), wherein the coupling device (10) connects the first machine (4) to the second machine (6).

10. Machinery system (2) according to claim 9,
**characterised in that** both machines (4, 6) are rotating machines, wherein the coupling device (10) connects a shaft (12) of the first machine (4) to a shaft (14) of the second machine (16).

11. Machinery system (2) according to claim 9 or 10,
**characterised in that** the first machine (4) is a turbine and the second machine (6) is a compressor.

12. Machinery system (2) according to any of the claims 9 to 11,
**characterised in that** the first guard unit (16) is connected, particularly flange connected, with the first machine (4) and
the second flange (22) of the second guard unit (18) is connected with a flange (32) of the second machine (6) at their respective face sides (28).
